# EUROPEAN PATENT APPLICATION

(11) **EP 3 845 585 A1**
(43) Date of publication of application: **07.07.2021**
(21) Application number: 20213886.3
(22) Date of filing: 14.12.2020
(51) Int. Cl.: C08J 9/26

(54) **TRANSPARENT, COLORLESS, POROUS POLYMERS DERIVED FROM MULTIPHASIC POLYMER NETWORKS**

(30) Priority: 02.01.2020 US 202016732627
(71) Applicant: Palo Alto Research Center Incorporated, Webster, NY 14580 (US)
(72) Inventor: MECKLER, Stephen, Mountain View, CA California 94041 (US); CHINTAPALLI, Mahati, Mountain View, CA California 94041 (US); IFTIME, Gabriel, Newark, CA California 94560 (US); BULGER, Eli, Nottawa, Ontario LOM 1P0 (CA)
(74) Representative: Gill Jennings & Every LLP

(57) **Abstract**

A porous, polymer aerogel having a pore size distribution with a full-width at half maximum between 0.1 and 10 nanometers, a visible transmittance greater than 30%/3mm, haze less than 70%/3mm, and a color rendering index of at least 25. A method of forming a porous, polymer aerogel, includes producing a miscible formulation of at least one of monomers, oligomers, crosslinkers and prepolymers, polymerizing the miscible formulation to form a multiphasic gel, wherein phases are continuous and the multiphasic gel has at least one depolymerizable domain and at least one non-depolymerizable domain, and the at least one depolymerizable domain is chemically bonded to the at least one non-depolymerizable domain, and removing the depolymerizable domain or domains from the multiphasic gel to produce a porous aerogel with a color rendering index of at least 25. A method of forming a porous, polymer aerogel, including producing a miscible formulation of at least one monomer, oligomer or crosslinker, and a prepolymer having at least one reactive functional group, polymerizing the miscible formulation to form a multiphasic gel, wherein the prepolymer having at least one reactive functional group is chemically bonded to a polymer that results from the polymerization of the at least one monomer or oligomer, and phases are continuous and the multiphasic gel has at least one depolymerizable domain bonded to at least one non-depolymerizable domain, and placing the multiphasic gel in a depolymerization solution having a depolymerization solvent to chemically degrade the depolymerizable domain into smaller oligomers and monomers, removing the depolymerization solvent to produce a porous aerogel with a color rendering index of at least 25.

## Description

### STATEMENT REGARDING FEDERALLY SPONSORED RESEARCH AND DEVELOPMENT

This invention was made with Government support under contract DE-AR000074 awarded by ARPA-E, Department of Energy. The Government has certain rights in this invention.

### TECHNICAL FIELD

This disclosure relates to transparent, colorless porous polymers, more particularly from transparent, colorless, porous polymers derived from multiphasic polymer networks.

### BACKGROUND

Transparent polymer aerogels are promising materials for thermal insulation in applications such as double- and single-pane windows. Typical aerogel syntheses involve forming a polymer or silica gel with a high volume fraction, typically 60% or greater, of solvent, exchanging that solvent for one with low affinity for the gel matrix material, and then carefully removing the solvent through processes including solvent exchange, such as by solvent exchange with liquid CO₂ followed by supercritical CO₂ drying, slow solvent evaporation, and supercritical activation. The process offers limited control over the pore network architecture, which may lead to opaque or hazy aerogels not suited for applications requiring transparency.

Techniques to delay the precipitation of the gel, reduce the network refractive index, and limit the pore size of the aerogels to less than 10 nanometers (nm) in diameter have been somewhat successful in producing polymer aerogels that are simultaneously porous, clear and colorless. These techniques typically employ solvent exchanges and/or slow drying, which may not be appropriate for all manufacturing environments and applications.

Porous aerogels have also resulted from an etchable block, such as a polylactic acid (PLA) domain that can be etched using a basic solution. In this particular approach, PLA fills the volume that will become pores after processing instead of synthesis solvent, which is not to be confused with the solvent used in solvent exchange mentioned above. However, these approaches use radical addition-fragmentation chain-transfer (RAFT) polymerization. This results in yellowish porous polymers not suitable for window and other transparent applications.

### SUMMARY

According to aspects illustrated here, there is provided a porous, polymer aerogel having a pore size distribution with a full-width at half maximum between 0.1 and 10 nanometers, a visible transmittance greater than 30%/3mm, haze less than 70%/3mm, and a color rendering index of at least 25.

According to aspects illustrated here, there is provided a method of forming a porous, polymer aerogel, includes producing a miscible formulation of at least one of monomers, oligomers, crosslinkers and prepolymers, polymerizing the miscible formulation to form a multiphasic gel, wherein phases are continuous and the multiphasic gel has at least one depolymerizable domain and at least one non-depolymerizable domain, and the at least one depolymerizable domain is chemically bonded to the at least one non-depolymerizable domain, and removing the depolymerizable domain or domains from the multiphasic gel to produce a porous aerogel with a color rendering index of at least 25.

According to aspcects illustrated here, there is provided a method of forming a porous, polymer aerogel, including producing a miscible formulation of at least one monomer, oligomer or crosslinker, and a prepolymer having at least one reactive functional group, polymerizing the miscible formulation to form a multiphasic gel, wherein the prepolymer having at least one reactive functional group is chemically bonded to a polymer that results from the polymerization of the at least one monomer or oligomer, and phases are continuous and the multiphasic gel has at least one depolymerizable domain bonded to at least one non-depolymerizable domain, and placing the multiphasic gel in a depolymerization solution having a depolymerization solvent to chemically degrade the depolymerizable domain into smaller oligomers and monomers, removing the depolymerization solvent to produce a porous aerogel with a color rendering index of at least 25.

### BRIEF DESCRIPTION OF THE DRAWINGS

Figure 1 shows an embodiment of a porous, polymer aerogel formed from a multiphasic gel.
Figure 2 shows a flowchart of an embodiment of a method of forming a porous, polymer aerogel.
Figure 3-5 show specific embodiments of methods of forming a porous, polymer aerogel.
Figure 6 shows a graph of pore size distribution.
Figure 7 shows photographs of samples produced without and with extra solvent.

### DETAILED DESCRIPTION OF THE EMBODIMENTS

The embodiments here describe a transparent, colorless, porous aerogel polymer obtained by copolymerizing components into nanostructured domains, some of which can be selectively depolymerized. This selective depolymerization leaves behind well-defined pore volume in the non-depolymerizable domain.

As used here, the term "component" refers to the chemicals as they are used in the reaction mixture, before any reactions have occurred. The types of components include monomers, oligomers and prepolymers.

The term "prepolymer" refers to a monomer, mixture of monomers, or polymer that has been reacted to an intermediate molecular mass state and can undergo further polymerization, for example through reactive end groups, to form a larger polymer or to be incorporated into a gel. The term "domains" refers to the gelled and separated materials. The term "depolymerization" refers to removal of certain domains from the gelled and separated materials. This may occur in a selective manner where the process removes one domain, but at least one other domain remains. Depolymerization may result in the depolymerizable domain breaking into smaller oligomers and monomers, or it may result in it being cleaved from the larger polymer gel at one or more chemical bonds.

Generally, at least two components form a multiphasic gel formed of continuous polymer domains, one or more domains having one or more polymers that are selectively depolymerizable and one or more domains having one or more polymers that are not depolymerizable under the depolymerization conditions of the first depolymerizable domains. The depolymerizable domain chemically bonds to the domain that is not depolymerizable, preventing macrophase separation (phase separation above a 1 micron length scale). In the absence of bonding between the two domains, it is likely that they will separate to form larger structures of relatively uncontrolled size. These structures could be domains greater than twice the radius of gyration of the polymers themselves all the way up to total phase separation, when the materials macroscopically separate. With bonding between the domains, the phase separation becomes a local event that can be controlled by changing the size of the polymers making up those domains. That way, when the depolymerizable domain is removed, pores are formed following the controlled template of the microphase-separated depolymerizable domains.

The chemical functionality bonding the depolymerizable domain or domains to the non-depolymerizable domain or domains is chosen such that the final material after the depolymerizable domain is removed does not absorb light in a range of wavelengths of interest, typically either the visible or solar wavelengths. Chemistries to adhere the domains can include radical polymerizations, thiol-ene reactions, thiol chain transfer reactions, azide-alkene click reactions, hydrogen bonding, addition to a terminal or pendant carbonyl, Diels-Alder reactions, reactions with an epoxide, or polymer addition or condensation reactions including those resulting in amide, ether, ester, carbonate, or urethane bonds.

In the case where radical polymerization is used to bond the domains, multiple components will have functionalities with a carbon-carbon double bond capable of polymerization. Such compounds include acrylates, methacrylates, vinyl groups, and styrenic compounds. The radical bonding can be promoted by a radical initiator such as azobisisobutyronitrile, benzoyl peroxide, di-tert-butyl peroxide, methylethyl ketone peroxide, or chlorine. The radical bonding can also be promoted using heat or radiation such as visible or ultraviolet light. [Odian, George. Principles of Polymerization, Fourth Edition. Pages 198-349. John Wiley & Sons, Inc. Hoboken, New Jersey, 2004.]

In the case where a thiol-ene reaction is used to bond the domains, one component will have a terminal or pendant thiol and another will have a terminal or pendant carbon-carbon double bond, such as a vinyl or styrenic group. The reaction between the thiol and carbon-carbon double bond can be promoted by a radical initiator including those in the previous paragraph or by a catalyst such as a base or nucleophile including pyridine and 4-dimethylaminopyridine. [Angew. Chem. Int. Ed. 2010, 49, 1540 - 1573.] If the component with a carbon-carbon double bond is undergoing radical polymerization when the thiol reacts with it, the reactive chain end will abstract a hydrogen from the thiol, and a new polymer chain end will initiate from the resulting sulfur radical. This can be considered a thiol chain-transfer reaction [Odian, George. Principles of Polymerization, Fourth Edition. Pages 238 - 255. John Wiley & Sons, Inc. Hoboken, New Jersey, 2004.]

In the case where an azide-alkene click reaction is used to bond the domains, one precursor component will be terminated in an azide group, and another component will have an alkene functionality. These chemical groups can react to form triazoles that connect the two domains. In some cases, copper catalysts such as copper chloride, copper iodide, or copper sulfate can be used. *[*Coord. Chem. Rev. 2011, 255, 2933 - 2945.]

In the case where hydrogen bonding is used to bond the domains, both components will have hydrogen bond donator/acceptor pairs. These include hydrogen-nitrogen bonds, hydrogen-oxygen bonds, and hydrogen-fluoride bonds. *[*J. Polym. Res. 2008, 15, 459 - 486.]

In the case where addition to a terminal or pendant carbonyl is used to bond the domains, one component will have a terminal or pendant carbonyl and another will have a nucleophile such as an alcohol or a primary or secondary amine. Variants of this include where the acid is an acid chloride or an acid anhydride. [Jones, Maitland, Jr. Organic Chemistry, Third Edition. Pages 975 - 1118. W. W. Norton & Company, New York, New York, 2005]

In the case where a Diels-Alder reaction is used to bond the domains, one component will have a terminal or pendant dieneophile such as an alkene or alkyne and the other will have a diene. The reaction can be promoted using a Lewis acid catalyst and/or by raising the temperature. [Chem.: Eur. J. 2009, 15, 5630 - 9.]

In the case where a reaction with an epoxide group is used to bond the domains, one domain will have an epoxide functionality, and the other will have a hydroxyl group, amine, thiol, Grignard reagent, azide, or the like. In some cases an acid, base, or other catalyst can be used. [Arkivoc 2006, 3, 6 - 33.]

In the case where an addition or condensation reaction is used to bond the domains, one of the components will have a chemical functionality capable of acting as a monomer in a polymerization reaction, and another component will either grow from that functionality or be appended there. [Odian, George. Principles of Polymerization, Fourth Edition. Pages 39 - 197. John Wiley & Sons, Inc. Hoboken, New Jersey, 2004.]

In the cases of the reactions above, it is important that the final chemical groups resulting from the bonding chemistry produce no color. This can be predicted computationally or by comparison to the appearance of previous reaction products or small molecules with structures analogous to the bonding group chemistry.

The embodiments here produce a porous, polymer aerogel having a pore size distribution controlled by the dimensions of the depolymerizable domain, which are determined by molecular weight, dispersity, and molecular weight distribution of the depolymerizable domain, as well as a total porosity determined by the volume fraction of the depolymerizable domain(s) after gelation. Thus, in some cases the porosity and pore size distribution can be controlled independently. One such case occurs when the depolymerizable domain is formed from a terminally functionalized, soluble prepolymer. The molecular weight, dispersity, and molecular weight distribution of the depolymerizable domain precursor are established before the gelation reaction, determining the pore size. The volume fraction of terminally functionalized, soluble prepolymer determines the porosity and can be tuned by changing the ratio of terminally functionalized, soluble prepolymer to the other components of the reaction. The terminal functional group allows chemical bonding between the depolymerizable domain precursor components and the non-depolymerizable domain precursor components. Using this method, a tradeoff common in aerogels materials where high porosity leads to low transparency can be overcome.

Decoupling porosity from pore size allows for the formation of porous polymers with both high porosity and small pore size. High porosity is desirable in applications such as thermal insulation. In typical aerogel formation processes, high porosity samples have large pore sizes, which reduce the transparency and increase the haze through light scattering. This invention allows for highly porous materials with optical properties comprising high transparency, colorlessness, and low haze that would be difficult to achieve through other means.

In some embodiments, 95 % of the pore volume or more is composed of pores below 20 nm in diameter. In this and other cases, the average pore diameter is less than 20 nm. In some embodiments, the pore-size distribution is narrow, such that the full-width at half maximum is between 0.1 and 10 nanometers (nm). 'Full-width at half maximum' refers to the extent of a function given by the difference between the two extreme values at which the dependent variable is equal to half its maximum value.

The embodiments here can also be used to produce transparent or non-transparent aerogels with narrow pore size distribution, or special pore size distributions such as unimodal, bimodal, trimodal, or multimodal distributions. In these cases, the pore characteristics are influenced by the molecular weight, dispersity, and molecular weight distribution of the depolymerizable, pore-templating component of the gel, which forms depolymerizable domains with the desired unimodal, bimodal, trimodal, or multimodal size distributions. The de-polymerizable component can be introduced as a terminally functionalized, soluble prepolymer with the desired molecular weight characteristics.

The Color Rendering Index is a measure of transmitted daylight through a window to portray a variety of colors compared to those seen under daylight without the window. The scale typically runs from 1-100 and values of 80 and over are considered good quality windows. The porous, polymer aerogel here has a CRI of at least 25, 50, 80, or 90, defined with respect to standard International Committee on Illumination (CIE) Illuminant C.

Transmitted color can also be quantified by other scales, including CIE L*a*b* color space or Hunter Lab. In both of the Lab color spaces, L roughly corresponds to intensity (ranging from 0-100, with 100 at maximum intensity), *a* roughly corresponds to green-red (ranging from -100 to +100, with 0 representing neutral grey), and b roughly represents yellow-blue (ranging from -100 to +100, with 0 representing neutral grey). The specific values of Lab can vary by implementation, for example, the scale can be adjusted to an 8-bit 128 value scale, or the scale depends on the standard illuminant used (e.g. CIE Illuminant C). The porous polymer aerogels can have a wide range of L values, while *a* and *b* can be within ±1, ±5, ±10, ±25, or ±50.

Aerogels with large average pore size (>20 nm) made by the methods in this patent in general have lower light transmittance and higher light reflectance. These materials show low coloration (by CRI or LAB color scales) in reflectance, transmittance, or both.

Transmittance is a measure of how much light can pass through the material and is generally associated with a particular thickness, such as X amount of light transmits through a sample of Y thickness. The porous, polymer aerogel of these embodiments has a visible transmittance greater than 30%/3mm aerogel path length in some embodiments, 50%/3mm in some embodiments, or 70%/3mm in some embodiments.

Haze is generally a measure of the percentage of transmitted light that is subject to wide-angle scattering. In the materials here, haze in the visible spectrum (∼300-800 nm) typically results from the diameter of the pores being too big, such as on the order of 20 nanometers (nm). This causes light to scatter rather than pass through the material, and the amount of light that scatters is the haze. The porous, polymer aerogels here can have haze values less than 70%/3mm in some embodiments, 50%/3mm in some embodiments, or 30%/3mm in some embodiments.

High porosity increases thermal insulation by reducing the amount of solid, high-thermal conductivity material and by disrupting convective heat transfer. The porous polymer aerogel of the embodiments here will typically have a porosity of greater than 5%, 10%, or 20%. The porous polymer aerogel of the embodiments here sometimes have thermal conductivities lower than 0.12 W/m•K, 0.10 W/m•K, 0.80 W/m•K, or 0.50 W/m•K.

As mentioned generally before, the aerogel is formed from a depolymerizable precursor and a non-depolymerizable precursor. At least one of the types of precursors is a monomeric component, where a "monomeric" component comprises monomers, short polymers, and, or crosslinkers. In some embodiments, one of the types of precursors is a monomer and the other is a prepolymer already polymerized but contains a chemical functionality that allows it to bond to the polymer resulting from the monomer precursor. The precursor that is a monomer could be either the depolymerizable precursor or the non-depolymerizable precursor. In this embodiment, polymerization refers to the transformation of the monomers and precursor prepolymers into a single multiphasic gel.

In some embodiments, the domain that is not depolymerized contains both a monomer and a crosslinker. The percentage of crosslinker in this domain can be between 0 and 100%. Generally, aerogels with less crosslinker are tougher materials less prone to mechanical failure, while materials with more crosslinkers are more rigid and more likely to retain porosity after depolymerization of the other domain or domains. The amount of crosslinker can be tuned to match the needs of specific applications. Crosslinking chemistries comprise difunctional or multifunctional methacrylates, acrylates, amines, anhydrides, azide compounds, divinylbenzene, 1,6-hexanediol dimethacrylate, and 1,6-hexanedioldiacrylate.

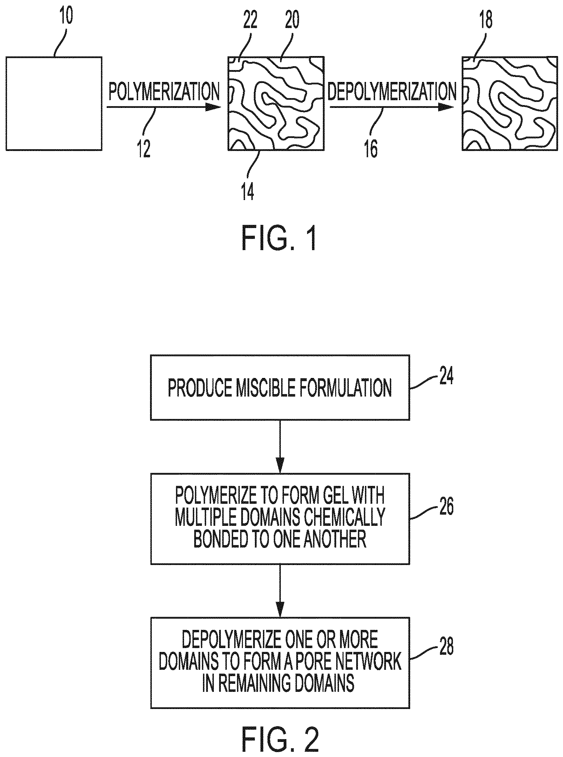

Figure 1 shows an embodiment of the materials undergoing these processes. The porous, polymer aerogels of the embodiments result from the process of mixing at least two different precursor components, wherein the first component and the second component are miscible before polymerization at 10 but immiscible after the polymerization process at 14. These characteristics may include where one precursor component creates polymers that are hydrophobic and the other precursor component creates polymers that are hydrophilic. One component may create a polymer that chemically bonds to the polymer created by the other components such that phase separation or microphase separation results without macrophase separation occurring. In some embodiments, miscibility of the components before polymerization will only occur with ultrasonic manipulation, in the presence of solvent, at elevated heat, with stirring, with shaking, with mixing, or with some combination of these.

When these monomers undergo polymerization at 12, the resulting polymers from the first and second components form a multiphasic gel 14. The first polymer, for purposes of this discussion here, will form the non-polymerizable domain 20, and the second polymer will form the depolymerizable domain 22. As mentioned above, the second polymer is chemically bonded to the first polymer.

In one embodiment, a small molecule chain transfer agent may be added to the precursor components to prevent precipitation of polymer nanoparticles. Here, a small molecule is any compound having a molecular mass less than 600 atomic mass units. Examples of small molecule chain transfer agents include dodecanethiol, chloroform, decanethiol, 4,4'-thiobisbenzenethiol, *tert*-nonyl mercaptan, pentaphenylethane, isooctyl 3-mercaptopropionate, 4-methylbenzenethiol, pentaerythritol tetrakis(3-mercaptopropionate), bromotrichloromethane, carbon tetrabromide, organic thiols, halogen compounds, and aromatic hydrocarbons. In another embodiment, a nitroxide mediator may be added to the polymerization process, making the polymerization a stable free radical polymerization (SFRP). SFRP is favored over other types of controlled radical polymerization such as RAFT or ATRP because the resulting materials can be made colorless. In some embodiments a low-catalyst ATRP method such as ARGET (Activator ReGenerated by Electron Transfer) ATRP or ICAR (Initiators for Continuous Activator Regeneration) ATRP could be used to produce low CRI aerogels.

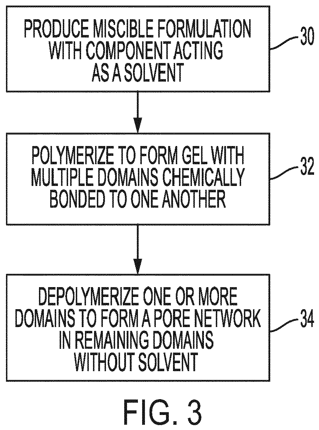

The depolymerizable polymer may be removed by etching or any other type of removal at 16, depolymerizing the second polymer, leaving pores such as 18 where the second polymer used to occupy volume. Figure 2 provides a general summary of the overall process, with further, more detailed embodiments shown in Figures 3-5. The process is summarized in Figure 2, where the first and second components are mixed at 24 to produce the miscible formulation, and polymerized at 26 to form the multiphasic gel with multiple domains that are chemically bonded together. The multiphasic gel at 26 may have domains that are immiscible with other domains. The gel then undergoes depolymerizing the second, depolymerizable domain at 28 to form the pores. Depolymerization can be carried out through the introduction of heat, acid, base, radiation such as ultraviolet radiation, vacuum, or some combination thereof. Depolymerization may also take the form of placing the multiphasic gel into a depolymerization solution having a depolymerization solvent to chemically degrade the depolymerizable domain into smaller oligomers and monomers or to cleave the depolymerizable domain from the rest of the multiphasic gel. A further, optional part of this may be using an additional solvent to dissolve the smaller oligomers, monomers and polymers after placing the gel in the depolymerization solution. This may be the same or different solvent than the depolymerization solvent. One should note that, unless a process depends upon a result of the previous process, no particular order of the processes within the flow charts is intended nor should any be implied.

In one example, the multiphasic gel forms during radical polymerization when monomers react to form oligomers, chains of monomers with very few repeating units that separate during the gelation reaction. As stated above, one or more phases of the resultant gel comprise one or more chemically robust, non-depolymerizable polymers, and one or more phases comprise one or more polymers that chemically degrade under controlled conditions. In one embodiment, the reaction may comprise components to form polymers that will make up the non-depolymerizable component including: poly(divinylbenzene); polystyrene; polyethylvinylbenzene; polymethylmethacrylate; polymethylacrylate; poly(1,6-hexanediol dimethacrylate); poly(1,6-hexanediol diacrylate); polydimethylsiloxane; polyethylene; polypropylene; polyacetylene; methacrylates; acrylates; epoxy resins; polyimides; polyolefins; condensation polymers; and copolymers thereof.

The depolymerizable domain may result from prepolymers, typically with terminal or pendant functional groups, including polylactic acid, polyglycolide, polycaprolactone, polyhydroxyalkanoate, polybutylene succinate, polyethylene terephthalate, polyethylene oxide, polypropylene carbonate, polyethylene carbonate, polyethers, aliphatic polyester homopolymers, aliphatic polyester copolymers, aromatic polyester homopolymers, aromatic polyester copolymers, and aliphatic polycarbonates having a prescribed and sometimes narrow molecular weight distribution. The depolymerizable domain can also be formed from components that will form these polymers.

Generally, depolymerizable domains are chosen such that they both are immiscible with the non-depolymerizable domains and will react to leave the multiphasic gel under conditions where the non-depolymerizable domains are stable. Some depolymerization mechanisms are effective with certain polymers or polymer types. For example, elevated heat can be used to depolymerize polyisobutylene, base can be used to depolymerize polyesters, and enzymes can be used to degrade proteins. Identifying complementary polymers that do not have these properties and are immiscible with the depolymerizable domain is a good strategy for producing successful formulations.

The components may be combined with a radical initiator comprising azobisisobutyronitrile, benzoyl peroxide, di-tert-butyl peroxide, methylethyl ketone peroxide, chlorine in a solvent comprising N-methylpyrrolidinone, dimethylformamide, acetophenone, methanol, ethanol, tetrahydrofuran, acetone, and methyl ethyl ketone. Neither the initiator nor the solvent are necessary in all formulations. The non-depolymerizable domain monomers form a phase that does not mix well with the depolymerizable prepolymer domain during polymerization. After polymerization, in this example, the gel is treated with an Arrhenius basic solution to remove the depolymerizable domain. Arrhenius basic solutions are effective in depolymerizing polyesters but will not depolymerize polymer domains made from acrylates, methacrylates, or styrenic compounds. The solvent system and base for etching is chosen such that the etching solution will penetrate the pores of the aerogel during the etching process and so that the base is soluble in the solvent or solvent mixture. The Arrhenius base solution can include alkali hydroxides, alkaline earth hydroxides, ammonium hydroxides, and mixtures thereof in a solvent including water, methanol, ethanol, dimethyl formamide, diethyl ether, tetrahydrofuran, and N-methyl pyrrolidinone or mixtures thereof. This solution hydrolyzes the depolymerizable domain, sometimes at elevated temperatures between 20 and 150 °C and for a period of time between 1 hour and 7 days, leaving just the rigid non-depolymerizable domain to form a porous polymer.

As mentioned above, previous approaches to forming transparent, porous aerogels included using a first solvent during polymerization, then exchanging that solvent for a solvent that was not as compatible with the aerogel and then carefully drying the combination to achieve pores in the aerogel. It is possible to include a solvent in the polymerization process outlined here, wherein the solvent used in the polymerization process is referred to as a "synthesis solvent." The solvent may facilitate mixing of components. Sometimes exchanging the solvent for another solvent can facilitate solvent removal.

Another reason to include a synthesis solvent is that once the depolymerizable domain has been removed, forming a first level of porosity, the synthesis solvent could then be dried out of the gel, accomplishing a second, higher level of porosity than would be achievable by just removing the depolymerizable polymer alone. As part of this process, the process could slow the removal of the solvent by reducing the temperature or introducing an atmosphere with a high vapor pressure of the solvent such that the rate of removal of the solvent is less than or equal to 75% of the rate of removal under typical ambient conditions. This can reduce cracking of the aerogel and form a greater specific pore volume. The rate of solvent removal can also be controlled pressure, convection, and temperature. In one embodiment, removing the solvent would comprise using supercritical fluid activation.

The overall process follows the general flow as shown in Figure 2. Figures 3-5 show more specific embodiments. Figure 3 shows an embodiment of the process of forming the transparent, colorless, porous polymer aerogel in which the process first produces a miscible formulation of precursor components without any solvent present at 30. The process does not use any extra solvent because the components of the reaction act as the solvent for the reaction. The miscible formulation then undergoes polymerizing at 32 to form a gel with multiple domains chemically bonded together. Some of the domains are immiscible with others. One or more of the domains undergo depolymerizing to form a pore network in the remaining domains without solvent at 34. Dry etching provides an example of this process. Processes where depolymerizable domains thermally degrade at lower temperatures than non-depolymerizable domains is another example of this process. Heat, reduced pressure, or both can be used in this case for the depolymerizing.

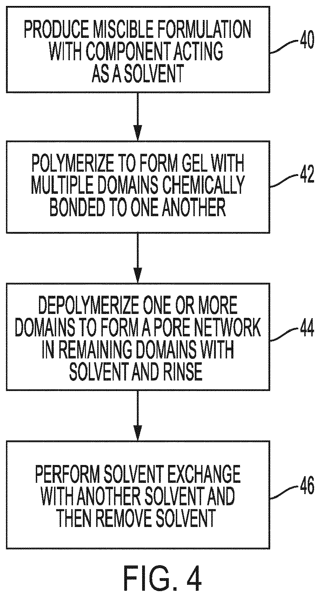

Figure 4 shows another embodiment of the process of forming the transparent, colorless, porous polymer aerogel. The process in this embodiment first produces a miscible formulation of precursor components without any solvent present at 40. The process does not use any extra solvent because the components of the reaction act as the solvent for the reaction. The miscible formulation then undergoes polymerizing at 42 to form a gel with multiple domains that are chemically bonded to one another. Some of the domains are immiscible with other domains. The gel then undergoes depolymerizing of one or more domains at 44 to form a pore network in the remaining domains with water or solvent used in the depolymerizing step. The solvent could be a mixture of solvents, including mixtures that contain water. The water or solvent might contain a compound to depolymerize the depolymerizable domain or domains at 44. This may require a rinse process to remove any material in the pores. The process may then optionally exchange the solvent with a same or different solvent before removing the solvent at 46. Chemical etching would be an example of this process.

### Example

A terminally functionalized polyester prepolymer such as polylactic acid, polyglycolide, polycaprolactone, polyhydroxyalkanoate, polybutylene succinate, or polyethylene terephthalate was dissolved in a liquid consisting of a monomer such as methylmethacrylate, methylacrylate, styrene, or ethylvinylbenzene and a crosslinker such as 1,6-hexanediol dimethacrylate; 1,6-hexanedioldiacrylate; or divinylbenzene. The terminal functional group on the prepolymer was capable of chemically bonding with one of the chemical groups on the monomer, crosslinker, or both. The terminal functional group might be a vinyl group, styrenic group, acrylate, methacrylate, azide, alkene, thiol, alcohol, amine, carboxylic acid, acid chloride, acid anhydride, amide, diene, dieneophile, isocyanate, epoxide, or the like. In some cases, heating was required to dissolve the prepolymer. The formulation was degassed with argon gas. The formulation was heated to a temperature between 50 and 200 °C for between 15 minutes and 24 hours, forming a solid gel. Polymerization can also occur due to visible or UV radiation without elevated temperatures. In some cases, an initiator such as azobisisobutyronitrile, benzoyl peroxide, di-tert-butyl peroxide, methylethyl ketone peroxide, or chlorine was used. The solid gel was placed in a solution containing a strong base such as magnesium hydroxide, sodium hydroxide, potassium hydroxide, alkali hydroxides, alkaline earth hydroxides, ammonium hydroxides, and mixtures thereof in a solvent such as water, methanol, ethanol, isopropanol, acetone, tetrahydrofuran, or mixtures thereof. The gel was kept in the basic solution for between 1 hour and 7 days at a temperature between 20 °C and 150 °C, depolymerizing the depolymerizable domains. The gel was then removed and rinsed with clean solvent and soaked in clean solvent one to five times for between 1 hour and 7 days each time. The solvent used in the rinsing could be the same or a different solvent or mixture of solvents as the depolymerization solvent. The gel was then dried, removing any solvent remaining in the pores and forming the aerogel.

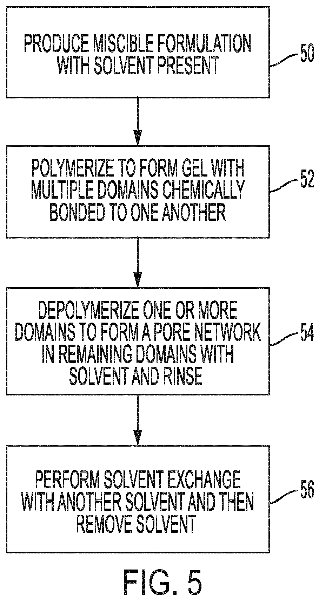

Figure 5 shows another embodiment of the process of forming the transparent, colorless, porous polymer aerogel. The process of this embodiment produces a miscible formulation of precursor components in the presence of a polymerization solvent at 50. The formulation undergoes polymerizing to form a gel with multiple domains that are chemically bonded to one another at 52. Some of the domains will be immiscible with some of the other domains. The gel then undergoes depolymerizing of one or more domains at 54 to form a pore network in the remaining domains in the presence of a solvent that may be in a depolymerization solution. The solvent might contain a compound to depolymerize the depolymerizable domain or domains at 54. The process may include rinsing or washing the porous polymer if necessary to removing any compound left in the pores. At 56 the process optionally exchanges the solvent in the pores with the same or a different solvent one or more times before removing the solvent. In some embodiments of this process, the synthesis solvent is removed before depolymerization, and depolymerization is done in the absence of solvent.

### Example

A terminally functionalized polyester prepolymer such as polylactic acid, polyglycolide, polycaprolactone, polyhydroxyalkanoate, polybutylene succinate, or polyethylene terephthalate was dissolved in a solvent such as N-methylpyrrolidinone, dimethylformamide, acetophenone, methanol, ethanol, tetrahydrofuran, acetone, or methyl ethyl ketone. The terminal functional group might be a vinyl group, styrenic group, acrylate, methacrylate, azide, alkene, thiol, alcohol, amine, carboxylic acid, acid chloride, acid anhydride, amide, diene, dieneophile, isocyanate, epoxide, or the like. To the formulation was added one or more monomers and/or crosslinkers such as methylmethacrylate; methylacrylate; styrene; ethylvinylbenzene; 1,6-hexanediol dimethacrylate; 1,6-hexanedioldiacrylate; or divinylbenzene. In some cases, heating was required to dissolve the prepolymer. In some cases, an initiator such as azobisisobutyronitrile, benzoyl peroxide, di-tert-butyl peroxide, methylethyl ketone peroxide, or chlorine was used. In some cases, a small molecule chain transfer agent such as dodecanethiol, chloroform, decanethiol, 4,4'-thiobisbenzenethiol, tert-nonyl mercaptan, pentaphenylethane, isooctyl 3-mercaptopropionate, 4-methylbenzenethiol, pentaerythritol tetrakis(3-mercaptopropionate), bromotrichloromethane, carbon tetrabromide, organic thiols, halogen compounds, or aromatic hydrocarbons was used. The formulation was degassed with argon gas. The formulation was heated to a temperature between 50 and 200 °C for between 15 minutes and 24 hours, forming a solid gel. Polymerization can also occur due to visible or UV radiation without elevated temperatures. The solid gel was placed in a solution containing a strong base such as magnesium hydroxide, sodium hydroxide, or potassium hydroxide in a solvent such as water, methanol, ethanol, isopropanol, acetone, tetrahydrofuran, or mixtures thereof. The gel was kept in the basic solution for between 1 hour and 7 days at a temperature between 20 °C and 150 °C, depolymerizing the depolymerizable domains. The gel was then removed and rinsed with clean solvent and soaked in clean solvent one to five times for between 1 hour and 7 days each time. In some cases, the solvent was changed between soaks, effecting a solvent exchange. This can be done to remove the remains of the depolymerizable domain and to reduce the amount of pore collapse when the gel is dried. Finally, the solvent was removed from the gel. In some cases, pressure, temperature, controlled vapor pressure, or convection were used to slow the rate of solvent removal to reduce cracking and pore collapse. In other cases, supercritical CO₂ activation can be used to remove the solvent. Removal of the solvent forms the aerogel.

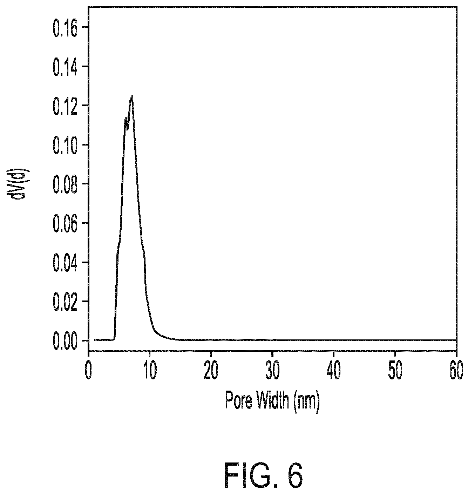

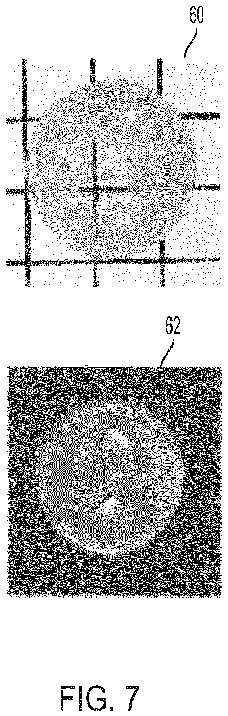

Figure 6 shows a graph of pore size distribution resulting from one or more of these processes. In addition, Figure 7 shows a comparison of an aerogel manufactured without synthesis solvent at 60 and with synthesis solvent at 62.

In the above embodiments of the porous polymer fabrication procedure, it is possible to produce the porous polymers with low levels of solvent in the synthesis procedure, comprising 0-40% solvent by volume. Additionally, the solvent exchanges and solvent-based depolymerization steps can sometimes be effected using low-flammability solvents and solvent mixtures including those with water and water/alcohol mixtures.

As discussed above, one application for this transparent, colorless, porous polymer aerogel is for window glazing, in single, double, triple, or multiple-pane windows. The aerogel makes a window with high visible transmittance, high CRI, low haze, and low thermal conductivity. Whether used as a window or not, the gel has these properties for any application.

In some applications, this transparent, colorless, porous polymer aerogel might be attached to another substrate such as an adhesive layer, glass, panelized building material, metal, ceramic, non-porous polymer, porous substrate, and nonporous substrate. The attachment may occur through curing, such as with light and heat, pressure, or using an adhesive.

It will be appreciated that variants of the above-disclosed and other features and functions, or alternatives thereof, may be combined into many other different systems or applications. Various presently unforeseen or unanticipated alternatives, modifications, variations, or improvements therein may be subsequently made by those skilled in the art which are also intended to be encompassed by the following claims.

## Claims

1. A porous, polymer aerogel having a pore size distribution with a full-width at half maximum between 0.1 and 10 nanometers, a visible transmittance greater than 30%/3mm, haze less than 70%/3mm, and a color rendering index of at least 25.

2. The porous polymer aerogel as claimed in claim 1, wherein the aerogel has a porosity of greater than 5%.

3. The porous, polymer aerogel as claimed in claim 1, wherein the aerogel has an average pore diameter less than 20 nm.

4. The porous, polymer aerogel as claimed in claim 1, wherein the aerogel has a thermal conductivity less than 0.12 W/m•K.

5. The porous, polymer aerogel as claimed in claim 1, wherein the aerogel is comprised at least in part of: poly(divinylbenzene); polystyrene; polyethylvinylbenzene; polymethylmethacrylate; polymethylacrylate; poly(1,6-hexanediol dimethacrylate); poly(1,6-hexanediol diacrylate); polydimethylsiloxane; polyethylene; polypropylene; polyacetylene; methacrylates; acrylates; epoxy resins; polyimides; polyolefins; condensation polymers; or copolymers thereof.

6. A method of forming a porous, polymer aerogel, comprising:
producing a miscible formulation of at least one of monomers, oligomers, crosslinkers and prepolymers;
polymerizing the miscible formulation to form a multiphasic gel, wherein phases are continuous and the multiphasic gel has at least one depolymerizable domain and at least one non-depolymerizable domain, and the at least one depolymerizable domain is chemically bonded to the at least one non-depolymerizable domain; and
removing the depolymerizable domain or domains from the multiphasic gel to produce a porous aerogel with a color rendering index of at least 25.

7. The method as claimed in claim 6, wherein the at least one polymerizable domain is chemically bonded to the at least one non-depolymerizable domain as a result of a chemical reaction that imparts no color to the aerogel.

8. The method as claimed in claim 7, wherein the chemical reaction is one of the group consisting of: radical polymerization; a thiol-ene reaction; an azide-alkene click reaction; a thiol chain transfer reaction; hydrogen bonding; addition to a terminal or pendant carbonyl; Diels-Alder reaction; reactions with epoxides; or polymer addition or condensation reactions resulting in amide, ether, carbonate or urethane bonds.

9. The method as claimed in claim 6, further comprising adding a small molecule chain transfer agent.

10. The method as claimed in claim 6, wherein the polymerizing includes adding a nitroxide mediator.

11. The method as claimed in claim 6, wherein one or more components of the miscible formulation that will form the at least one of the non-depolymerizable domains comprises compounds that contain or form polymers selected from the group consisting of:
poly(divinylbenzene); polystyrene; polyethylvinylbenzene; polymethylmethacrylate; polymethylacrylate; poly(1,6-hexanediol dimethacrylate); poly(1,6-hexanediol diacrylate); polydimethylsiloxane; polyethylene; polypropylene; polyacetylene; methacrylates; acrylates; epoxy resins; polyimides; polyolefins; condensation polymers; and copolymers thereof.

12. The method as claimed in claim 6, wherein one or more components of the miscible formulation that will form the at least one of the depolymerizable domains comprises compounds that contain or form polymers selected from the group consisting of: polylactic acid, polyglycolide, polycaprolactone, polyhydroxyalkanoate, polybutylene succinate, polyethylene terephthalate, polyethylene oxide, polypropylene carbonate, polyethylene carbonate, polyethers, aliphatic polyester homopolymers, aliphatic polyester copolymers, aromatic polyester homopolymers, aromatic polyester copolymers, and aliphatic polycarbonates.

13. The method as claimed in claim 6, wherein the components of the miscible formulation that form the at least one of the depolymerizable domains have a prescribed molecular weight distribution that forms domains with one of unimodal, bimodal, trimodal, or multimodal size distributions.

14. The method as claimed in claim 6, further comprising controlling a volume fraction of the depolymerizable domain in the multiphasic gel to control porosity, and controlling dimensions of the depolymerizable domain to control pore size.

15. The method as claimed in claim 6, wherein at least one component of the miscible formulation acts as a solvent with no other solvent present.

16. The method as claimed in claim 6, wherein removing the depolymerizable domain comprises depolymerization wherein at least one of the at least one depolymerizable domains is removed in the absence of a solvent.

17. The method as claimed in claim 16, wherein removing the depolymerizable domains comprises using at least one of heat or reduced pressure.

18. The method as claimed in claim 6, wherein removing the depolymerizable domain comprises depolymerization wherein at least one of the at least one depolymerizable domains is removed in the presence of a depolymerization solvent.

19. The method as claimed in claim 18, wherein the depolymerization solvent contains a base such as magnesium hydroxide, sodium hydroxide, potassium hydroxide, alkali hydroxides, alkaline earth hydroxides, ammonium hydroxides, and mixtures thereof.

20. The method as claimed in claim 6, wherein the polymerizing includes a polymerization solvent in the polymerization.

21. The method as claimed in claim 6, further comprising removing any solvent from one of either the multiphasic gel or the aerogel.

22. The method as claimed in claim 21, wherein removing the solvent creates a higher level of porosity than depolymerizing alone.

23. The method as claimed in claim 21, wherein removing the solvent comprises controlling the rate of solvent removal through at least one of pressure, temperature, controlled vapor pressure, convection, or supercritical fluid activation.

24. The method as claimed in claim 21, further comprising performing solvent exchange with a same or a different solvent than the polymerization solvent or depolymerization solvent.

25. The method as claimed in claim 6, further comprising attaching the aerogel to another substrate such as an adhesive layer, glass, panelized building material, metals, ceramic, non-porous polymer, porous substrate, and nonporous substrate.

26. The claim of claim 6 wherein the full width at half maximum pore size is between 0.1 and 10 nanometers.

27. The claim of claim 6 wherein the porous aerogel has thermal conductivity less than 0.12 W/m•K

28. A method of forming a porous, polymer aerogel, comprising:
producing a miscible formulation of at least one monomer, oligomer or crosslinker, and a prepolymer having at least one reactive functional group;
polymerizing the miscible formulation to form a multiphasic gel, wherein the prepolymer having at least one reactive functional group is chemically bonded to a polymer that results from the polymerization of the at least one monomer or oligomer, and phases are continuous and the multiphasic gel has at least one depolymerizable domain bonded to at least one non-depolymerizable domain; and
placing the multiphasic gel in a depolymerization solution having a depolymerization solvent to chemically degrade the depolymerizable domain into smaller oligomers and monomers;
removing the depolymerization solvent to produce a porous aerogel with a color rendering index of at least 25.

29. The method of claim 28, wherein the depolymerizable domain is formed from the prepolymer having at least one reactive functional group.

30. The method of claim 28, further comprising one of washing or rinsing, or performing solvent exchange with, an additional solvent that dissolves the smaller oligomers and monomers from the chemically degraded depolymerizable domain after the placing.

31. The method of claim 28, wherein the depolymerizable solution to chemically degrade the depolymerizable domain contains a base such as magnesium hydroxide, sodium hydroxide, potassium hydroxide, alkali hydroxides, alkaline earth hydroxides, ammonium hydroxides, and mixtures thereof.

32. The method as claimed in claim 28, wherein the chemical bond bonding the prepolymer to the polymer is formed through a chemical reaction from a group consisting of: radical polymerization; a thiol-ene reaction; an azide-alkene click reaction; a thiol chain transfer reaction; hydrogen bonding; addition to a terminal or pendant carbonyl; Diels-Alder reaction; or polymer addition or condensation reactions resulting in amide, ether, carbonate or urethane bonds.

33. The method as claimed in claim 28, wherein the prepolymer has a prescribed molecular weight distribution that will form domains with one of unimodal, bimodal, trimodal, or multimodal size distributions.

34. The method as claimed in claim 28, wherein at least one component of the miscible formulation acts as a solvent with no other solvent present.

35. The method as claimed in claim 28, wherein the miscible formulation includes a polymerization solvent and the method further comprises removing any remaining portions of any solvents after the placing to produce a porous aerogel.

36. The method of claim 28 further comprising washing, rinsing, or performing solvent exchange with, an additional solvent that dissolves the smaller oligomers and monomers from the chemically degraded depolymerizable domain after the placing.
